(19) Europäisches Patentamt
European Patent Office
Office européen des brevets

(11) EP 2 543 813 A1

(12) EUROPEAN PATENT APPLICATION

(43) Date of publication:
09.01.2013 Bulletin 2013/02

(51) Int Cl.:
E21B 47/16 (2006.01)
H04L 27/00 (2006.01)
G01V 11/00 (2006.01)

(21) Application number: 11173208.7

(22) Date of filing: 08.07.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Nederlandse Organisatie voor Toegepast -Natuurwetenschappelijk Onderzoek TNO
2628 VK Delft (NL)
(72) Inventors:
• Volker, Arno Willem Frederik
2628 VK Delft (NL)
• Vos, Rik
2628 VK Delft (NL)
• Heerens, Gert Jan
2628 VK Delft (NL)

(74) Representative: Jansen, Cornelis Marinus et al
VEREENIGDE
Johan de Wittlaan 7
2517 JR Den Haag (NL)

(54) **A telemetry system, a pipe and a method of transmitting information**

(57) The invention relates to a telemetry system for use in a pipe having a wall, comprising a transmitter adapted to generate at least one acoustic wave in a frequency range of about 25 - 100kHz and to inject the acoustic wave in the wall of the pipe, wherein the transmitter is further arranged to binary code information conceived to be transmitted with the acoustic wave. The invention further related to a pipe comprising the telemetry system and to a method of transmitting information via a pipe.

Fig. 2

**Description**

FIELD OF THE INVENTION

The invention relates to a telemetry system for use in a pipe having a wall.
The invention further relates to a pipe.
The invention still further relates to a method of transmitting information through a pipe.

BACKGROUND OF THE INVENTION

An embodiment of a pipe as is set forth in the opening paragraph is known from EP 2 157 279. the known pipe comprises a transmitter for generating an acoustic signal with a frequency of a few kHz at a first location near a distal portion of the pipe, a receiver located at a further position in the pipe for receiving the acoustic signal and for attempting to synchronize the receiver at the transmitter frequency and depending on a success of the synchronization step either to carry on data transmission or to adjust the transmission frequency.
It is a disadvantage of the known pipe that due to reflections in the joints of the segmented pipe only a limited frequency bands around about 2 - 3 kHz can be used. This has a further disadvantage that low frequencies limit data transmission rates considerably, which is not desirable.

SUMMARY OF THE INVENTION

It is an object of the invention to provide an improved pipe and a telemetry system for use with the pipe enabling data transmission with increased transmission rates, wherein such transmission is reliable and substantially error-free.
To this end the telemetry system for use in a pipe having a wall comprises a transmitter adapted to generate at least one acoustic wave in a frequency range of 25 - 300 kHz and to inject the acoustic wave in the wall of the pipe, wherein the transmitter is further arranged to binary code information conceived to be transmitted with the acoustic wave. It will be appreciated that for the pipe a drill pipe may be selected. It is found that the frequency range of 25 - 300 kHz is particularly suitable to accommodate a wall thickness range which may be used for industrial pipes.
It is found that for a transmission using ultrasound waves propagating in a wall of a pipe, a characteristic parameter (P) for ultrasonic information transfer depends on a wave number multiplied by wall thickness of a pipe. This variable (P) should be minimized because for such variables having a high value the attenuation of the signal in the material of the pipe increases accordingly:

$$P = \frac{2\pi f}{C_S} \frac{D}{2},$$

wherein
f is the frequency of the acoustic wave propagating in a wall of the pipe;
Cs is the shear velocity of the acoustic wave;
D is a thickness of the wall.
However, it is noted that the phase velocity of the acoustic wave decreases with increasing the parameter (P). In addition, for high values of the parameter (P) higher ultrasound frequencies may be used which enable use of higher data transmission rates.
The invention has an advantage that no carrier wave is used. The information conceived to be transmitted using the ultrasound waves is binary coded using a pre-determined rule for the multiple frequencies of the generated ultrasound waves.
For example, separate frequencies may be switched on /off for data encoding according to the following exemplary rule: 50kHz = 1; 51kHz = 0; 52 kHz = 1, etc., that is even frequencies are assigned the logic 1 and odd frequencies are assigned the logic 0.
Alternatively, it is also possible to assign frequency groups, such as pairs, for coding. For example pairs (50, 51)kHz, (52, 53)kHz, etc. may be used for binary coding information conceived to be transmitted so that only one frequency from the pair is transmitted. According to a rule, when 50kHz is received, the bit equals to 0, when 51 is received, the bit equals to 1, etc. When none of the frequencies from the assigned pairs (or larger groups) is received the threshold can be adapted to receive either of the two. This method can be used for overcoming false 0 and to increase confidence in data transfer at a cost of data rate.
In a particular embodiment of the telemetry system according to the invention the acoustic wave is a L (0, 2) or T(0,1) wave.
In particular, it is found that the L(0, 2) wave is particularly useful because the particle motion in this wave is mainly longitudinal which causes a low liquid coupling (i.e. low attenuation) and a good coupling between the successive segments of the pipe.
In a further embodiment of the telemetry system according to the invention the transmitter comprises an array of elements. Piezoelectric elements or elements operating using other technology, such as electromagnetic acoustic transducers may be used. Preferably, the transmitter is ring-shaped.
It is found that an array-shaped or ring-shaped embodiment of the transmitted is useful, as it may be easily integrated between the segments of the pipe. Usually, the segments are about 10 meter long. A transmitter operated according to the invention is capable of transmitting the acoustic waves carrying information through several segments. Three to five segments may be transmitted through without a need for amplification.

Because the pipes are much longer than 30 meters, it may be necessary to built-in an amplifier on a path of the ultrasonic waves emanated from the transmitter. For example, the amplifiers may be provided every 3 - 5 segments.

In a further embodiment of the telemetry system according to the invention, the amplifier is adapted to implement a consistency check of a received binary code.

Those skilled in the art will readily appreciate which per se known consistency check algorithms may be used for this purpose. It will be further appreciated that such smart logic may form part of the amplifier, or, alternatively, the signal received by the amplifier may be processed by a dedicated smart logic unit and returned to the amplifier for amplification. For the simplicity reasons, the latter arrangement is referred to as an amplifier.

In a still further embodiment of the telemetry system according to the invention the amplifier is further arranged to generate an amplified frequency shifted signal.

It is found to be particularly useful to allow a frequency shift of the amplified signal with respect to the signal feeding the amplifier. For example, for a first amplifier, receiving the in-frequencies of 50, 51, 52, 53, 54... x, kHz, the amplified signal may have the following frequencies: 50.1, 51.1, 52.1, 53.1, 54.1, ...x' kHz. This feature is found to be advantageous as interference between the amplified and the incoming signal is substantially avoided.

The pipe according to the invention comprises the telemetry system as is set forth with respect to the foregoing.

The method of transmitting information through a pipe, according to the invention, comprises the steps of injecting at least one acoustic wave in a frequency range of 25 - 100kHz in a wall of the pipe; wherein information conceived to be transmitted with the acoustic wave is binary coded. The method is found to be particularly suitable to transmit information from a drill location through a drill pipe.

In the preferable embodiments of the method according to the invention, for the at least one acoustic wave a L(0, 2) or a T(0,1) is selected. The method may further comprise the steps of amplifying a signal generated by the transmitter; implementing a consistency check of a received binary code.

In a still further advantageous embodiment of the method according to the invention it further comprises the step of frequency shifting an amplified signal with respect to the incoming signal.

These and other aspects of the invention will be discussed with reference to drawings wherein like reference signs correspond to like elements. It will be appreciated that the drawings are presented for illustrative purposes only and may not be used for limiting the scope of the appended claims.

BRIEF DESCRIPTION OF THE DRAWINGS

Figure 1 presents in a schematic way an embodiment of an overview of a drill set-up.
Figure 2 presents in a schematic way an embodiment of a telemetry system according to an aspect of the invention.
Figure 3 presents in a schematic way an embodiment of a ring-shaped transmitter provided in a joint of a pipe.

DETAILED DESCRIPTION OF THE DRAWINGS

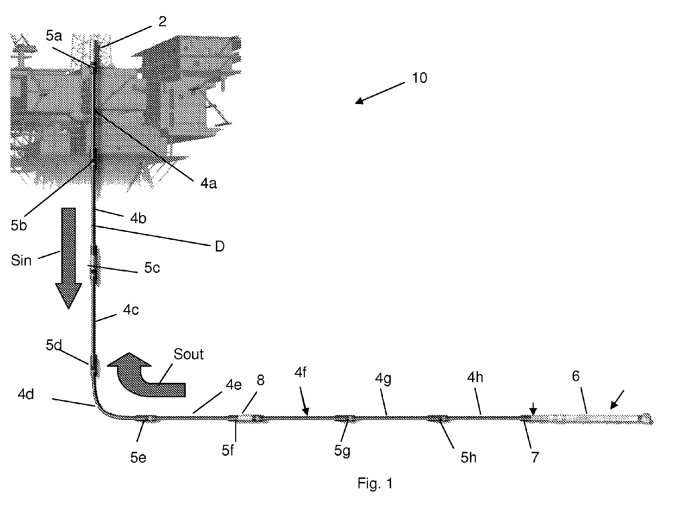

Figure 1 presents in a schematic way an embodiment of an overview of a drill set-up. A drilling installation 10 may be provided for implementing suitable underground exploration works. For example, drilling for investigating oil bearing strata may be envisaged.

A pipe D, notably a drill pipe, may be used for conducting control signals Sin from the control unit to the drill bit 6 and for conducting information at least about the drill environment Sout from the drill bit 6 up to the control system 3. In according to an embodiment of the telemetry system according to the invention a pipe D may be provided comprising a suitable number of pipe segments 4a, 4b, 4c, 4d, 4e, 4f, 4g, 4h interconnecting a control system 2 located above the ground with a drill bit 6 located distally. The pipe segments are interconnected by suitable joints 5a, 5b, 5c, 5d, 5e, 5f, 5g, 5h. Preferably, the pipe is manufactured from metal. However, other materials, such as metal may be used.

In accordance with the invention a telemetry system 7 is provided comprising a transmitter (not shown) adapted to generate at least one acoustic wave in a wall of the pipe D, wherein the frequency of the at least one acoustic wave is in the range of 25 - 100 kHz and wherein the transmitter is further arranged to binary code information conceived to be transmitted using the said at least one wave. It will be appreciated that it is found that a single wave mode is sufficient for transmitting the information using two or more frequencies.

For example, when a single frequency is used the amplitude of the acoustic signal may be used for coding the information into the binary code. For example, when the amplitude is set above a pre-defined threshold the value of the byte is 1, otherwise it is 0. Alternatively, a number of frequencies may be used for binary coding the information. As has been explained earlier, a rule can be used for assigning a particular frequency or frequencies to the value 1 and assigning other frequency or frequencies to the value 1.

In accordance with an aspect of the invention, the signal generated by the transmitter may be amplified by an amplifier provided in one or more joints of the pipe segments. For example, an amplifier 8 may be installed in the joint 5f to receive the acoustic signal propagating in the wall of the pipe D, to carry out a consistency check and to generate an amplified signal, which is preferably frequency shifted with respect to the incoming signal. This measure is found to be particularly advantageous for preventing undesirable signal interference post amplification.

It will be appreciated that information suitable for transmitting from the drill bite towards the control system may be collected by a suitable sensor or sensors arranged on or within the drill bite. This method of data collecting regarding particular characteristics of the drill environments is known per se and will not be explained here in details. For example, known systems arranged in the drill bite may comprise sensor or sensors adapted to provide information about the drilling process and the direction in which the drill bit is propagating. It will be further appreciated that particularly for exploration of oil bearing layers in strata drill strings may be quite long, up to several kilometers, for example.

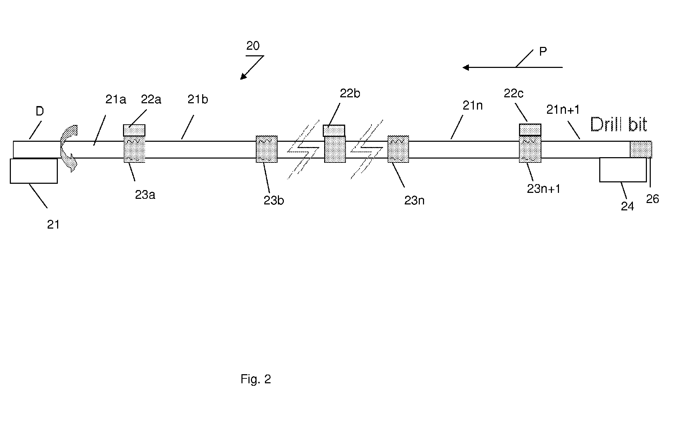

Figure 2 presents in a schematic way an embodiment of a telemetry system according to an aspect of the invention. As has been explained earlier, the pipe 20 may comprise a plurality of pipe segments 21a, 21b, ..., 21n, 21n+1, joined together. In accordance with the invention the drill bite 26 comprises a transmit/receive unit 24 arranged to collect control data from the control system for controlling or adjusting the drill bite and to transmit information data collected by suitable sensor or sensors provided on the drill bite 26 upstream towards the control system. The control system is usually located above the ground. The transmitter is adapted to generate at least one acoustic wave in a frequency range of about 25 - 100kHz and to inject the acoustic wave in the wall of the pipe, wherein the transmitter is further arranged to binary code information conceived to be transmitted with the acoustic wave. The acoustic wave or waves will propagate in the direction P upstream the pipe D towards the control system (not shown). In accordance with a further aspect of the invention a suitable plurality of amplifiers 22a, 22b, 22c is built-in the joints connecting the segments of the pipe D for amplifying the incoming signal. Preferably such amplifiers are arranged with a distance between them of about 3 - 5 meters and are further adapted to carry out a consistency check of the incoming binary word. In addition, for improving the signal transmission quality, the amplifiers 22a, 22b, 22c may be adapted to frequency shift the output amplified signal with respect to the input signal.

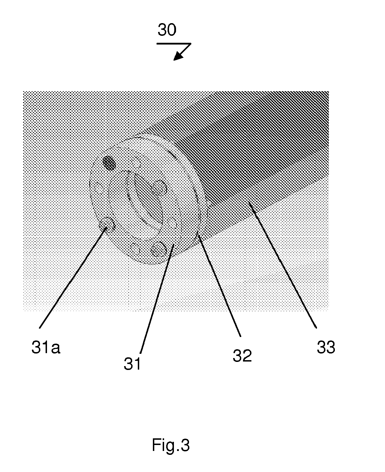

Figure 3 presents in a schematic way an embodiment of a ring-shaped transmitter provided in a joint of a pipe 30. The ring-shaped transmitter 32 is preferably built-in the pipe segment 33 and is coaxially arranged with it. The collar 31 which may be used for affixing the adjacent segments to each other may be used for firmly holding the transmitter 32. The collar may be provided with a suitable plurality of affixing elements 31a. The ring-shaped transmitter 32 is preferably manufactured from a piezoelectric material and may be implemented either as a continuous material, or as a suitable array of individual piezoelectric elements. The latter embodiment is advantageous in case the transmitter 32 is operable for generating a plurality of acoustic waves in the wall of the pipe 33.

While specific embodiments have been described above, it will be appreciated that the invention may be practiced otherwise than as described. Moreover, specific items discussed with reference to any of the isolated drawings may freely be inter-changed supplementing each outer in any particular way. The descriptions above are intended to be illustrative, not limiting. Thus, it will be apparent to one skilled in the art that modifications may be made to the invention as described in the foregoing without departing from the scope of the claims set out below.

## Claims

1. A telemetry system for use in a pipe having a wall, comprising a transmitter adapted to generate at least one acoustic wave in a frequency range of about 25 - 300 kHz and to inject the acoustic wave in the wall of the pipe, wherein the transmitter is further arranged to binary code information conceived to be transmitted with the acoustic wave.

2. The system according to claim 1, wherein the acoustic wave is a L(0, 2) or T(0,1) wave.

3. The system according to claim 1 or 2, wherein the transmitter comprises an array of elements.

4. The system according to claim 3, wherein the transmitter is ring-shaped.

5. The system according to any one of the preceding claims, wherein the pipe comprises consecutive segments, the transmitter being adapted to be positioned between the consecutive segments.

6. The system according to any one of the preceding claims, wherein the transmitter is adapted to generate a binary code using pre-defined frequencies of a plurality of the acoustic waves.

7. The system according to any one of the preceding claims, wherein the system further comprises an amplifier for amplifying a signal generated by the transmitter, the amplifier being arranged to implement a consistency check of a received binary code.

8. The system according to claim 7, wherein the amplifier is further arranged to generate an amplified frequency shifted signal.

9. A pipe comprising the telemetry system according to any one of the preceding claims.

10. The pipe according to claim 9, forming part of a drill arrangement.

11. A method of transmitting information through a pipe comprising the steps of:

    - injecting at least one acoustic wave in a frequency range of about 25 - 300kHz in a wall of the pipe; wherein information conceived to be transmitted with the acoustic wave is binary coded.

12. The method according to claim 11, wherein for the at least one acoustic wave a L(0, 2) or a T(0,1) is selected.

13. The method according to claim 11 or 12, further comprising the steps of:

    - amplifying a signal generated by the transmitter;
    - implementing a consistency check of a received binary code.

14. The method according to claim 13, further comprising the step of frequency shifting an amplified signal.

15. The method according to any one of the preceding claims 11 - 14, wherein for the pipe a drill pipe is used.

Fig. 1

Fig. 2

30

31a    31    32    33

Fig.3

Europäisches
Patentamt

European
Patent Office

Office européen
des brevets

## EUROPEAN SEARCH REPORT

Application Number

EP 11 17 3208

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 552 833 A1 (ANADRILL INT SA [PA]; SCHLUMBERGER SERVICES PETROL [FR]) 28 July 1993 (1993-07-28) | 1,3-11, 13-15 | INV. E21B47/16 G01V11/00 |
| Y | * column 5, line 56 - column 6, line 10; claims 1,6,8,9,10 * <br> * column 11, line 4 - line 27 * <br> ----- | 2,12 | H04L27/00 |
| Y | WO 2007/107734 A1 (QINETIQ LTD [GB]; DALTON ROGER PATRICK [GB]; WATERS MATTHEW [GB]; JAMI) 27 September 2007 (2007-09-27) * page 6, line 14 - page 8, line 21; figures 1-4 * <br> ----- | 2,12 | |
| X | US 6 348 876 B1 (WEI MICHAEL [US] ET AL) 19 February 2002 (2002-02-19) * column 5, line 66 - column 6, line 5; claim 1; figures 1,3 * <br> ----- | 1,6-11, 13-15 | |
| A | US 2004/105342 A1 (GARDNER WALLACE R [US] ET AL) 3 June 2004 (2004-06-03) * paragraph [0032] - paragraph [0034]; figures 1,6 * <br> ----- | 1-15 | TECHNICAL FIELDS SEARCHED (IPC) |
| A | US 4 562 559 A (SHARP H EUGENE [US] ET AL) 31 December 1985 (1985-12-31) * claim 1; figures 1-8 * <br> ----- | 1-15 | E21B G01V H04L |

The present search report has been drawn up for all claims

| Place of search | Date of completion of the search | Examiner |
|---|---|---|
| Munich | 28 November 2011 | Strømmen, Henrik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 3208

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2011

| Patent document cited in search report | | Publication date | Patent family member(s) | | Publication date |
|---|---|---|---|---|---|
| EP 0552833 | A1 | 28-07-1993 | DE | 69305754 D1 | 12-12-1996 |
| | | | EP | 0552833 A1 | 28-07-1993 |
| | | | NO | 930146 A | 22-07-1993 |
| | | | US | 5373481 A | 13-12-1994 |
| WO 2007107734 | A1 | 27-09-2007 | AU | 2007228618 A1 | 27-09-2007 |
| | | | CA | 2643517 A1 | 27-09-2007 |
| | | | CN | 101405475 A | 08-04-2009 |
| | | | EP | 1996794 A1 | 03-12-2008 |
| | | | RU | 2008141765 A | 27-04-2010 |
| | | | US | 2009003133 A1 | 01-01-2009 |
| | | | WO | 2007107734 A1 | 27-09-2007 |
| US 6348876 | B1 | 19-02-2002 | AU | 6866301 A | 02-01-2002 |
| | | | AU | 2001268663 B2 | 13-05-2004 |
| | | | BR | 0111829 A | 01-04-2003 |
| | | | CA | 2413984 A1 | 27-12-2001 |
| | | | CN | 1437742 A | 20-08-2003 |
| | | | EP | 1295271 A2 | 26-03-2003 |
| | | | JP | 2004501473 A | 15-01-2004 |
| | | | MX | PA03000164 A | 17-02-2005 |
| | | | US | 6348876 B1 | 19-02-2002 |
| | | | US | 2002113718 A1 | 22-08-2002 |
| | | | US | 2004207538 A1 | 21-10-2004 |
| | | | WO | 0198618 A2 | 27-12-2001 |
| US 2004105342 | A1 | 03-06-2004 | AU | 2003285521 A1 | 23-06-2004 |
| | | | US | 2004105342 A1 | 03-06-2004 |
| | | | WO | 2004051054 A2 | 17-06-2004 |
| US 4562559 | A | 31-12-1985 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2157279 A